# EUROPEAN PATENT APPLICATION

(11) **EP 4 549 499 A1**
(43) Date of publication of application: **07.05.2025**
(21) Application number: 24209577.6
(22) Date of filing: 29.10.2024
(51) Int. Cl.: C08J 5/18, C08K 3/36

(54) **RECYCLED POLYETHYLENE-CONTAINING COMPOSITION AND FILM USING THE SAME**

(30) Priority: 03.11.2023 KR 20230150862; 08.08.2024 KR 20240106353
(71) Applicant: SK Innovation Co., Ltd., Seoul 03188 (KR); SK Geo Centric Co., Ltd., Jongno-gu Seoul 03161 (KR)
(72) Inventor: KIM, Tae Ho, 34124 Daejeon (KR); KWON, Il Young, 34124 Daejeon (KR); KIM, Hak Bin, 34124 Daejeon (KR); CHEON, Si Uk, 34124 Daejeon (KR)
(74) Representative: Frick, Robert

(57) **Abstract**

The invention relates to a recycled polyethylene-containing composition and a recycled polyethylene-containing film using the same. Specifically, a recycled polyethylene-containing composition comprises polyethylene recovered from a secondary battery separator. According to the present invention, a separator on which a coating layer including an organic binder and/or inorganic particles formed may be reused as a raw material without a pre-processing process, and a composition for manufacturing a film may be provided.

## Description

### TECHNICAL FIELD

The present invention relates to a recycled polyethylene-containing composition and a film using the same.

### BACKGROUND

As the use of secondary batteries becomes popular, secondary batteries which are discarded at the end of their lifespans are increasing. Accordingly, various methods for recycling discarded secondary batteries are being studied. For example, an external can, a separator, a positive electrode/negative electrode, and the like are sorted, by performing a pre-processing work including recovering, discharging, crushing, and selecting waste secondary batteries, and then metal such as cobalt, nickel, lithium, and manganese may be recovered.

However, since most waste separators recovered from the waste secondary batteries, waste separators recovered from defective products, or separator scraps occurring in a manufacturing process are not recycled and are being processed by inappropriate methods such as incineration, they are criticized as a waste of resources and causes of environmental pollution.

Thus, in order to solve the problem, various efforts to recycle the waste separator have been attempted, but since the physical properties or the processability of the waste separator itself are insignificant, the waste separator needs to be adjusted to be appropriate for a selected for use intended for reuse and a molding method.

### SUMMARY

The present invention aims to provide a recycled polyethylene-containing composition for manufacturing a recycled polyethylene-containing film including polyethylene recovered from a secondary battery separator.

The present invention further aims to provide a recycled polyethylene-containing film reusing polyethylene recovered from a secondary battery separator as a raw material. Another embodiment of the present invention is directed to providing a recycled polyethylene-containing composition which may be used as a recycled polyethylene raw material as it is without a separate pre-processing process such as removing a coating layer from polyethylene recovered from a secondary battery separator.

Yet further, the present invention aims to provide a recycled polyethylene-containing film having no occurrence of defects such as pin holes, though the recycled polyethylene-containing film is manufactured using polyethylene recovered from a secondary battery as a raw material.

Against this background, the invention relates to a recycled polyethylene-containing composition, which includes: recycled polyethylene recovered from a secondary battery separator and porous powder. As an exemplary embodiment, the recycled polyethylene-containing composition may be obtained by dry blending or melting recycled polyethylene and porous powder.

As an exemplary embodiment, the recycled polyethylene may be powder obtained by crushing the separator or pellets obtained by melt extruding the separator, without removing a coating layer from the separator.

As an exemplary embodiment, the recycled polyethylene may have a content of inorganic particles of 70 wt% or less.

As an exemplary embodiment, the recycled polyethylene-containing composition may have a total inorganic content including the inorganic particles and the porous powder included in the recycled polyethylene of 50 wt% or less.

As an exemplary embodiment, the recycled polyethylene may have a melt flow index measured at 2.16 kg, 190°C of 5 g/10 min or less, a density of 0.95 g/cm³ or more, and a weight average molecular weight of 50,000 g/mol or more.

As an exemplary embodiment, the recycled polyethylene may include a low molecular weight material, which is preferably decomposed at a lower temperature than a polyethylene reference material and shows a peak in the results of measurement using a thermogravimetric analyzer (TGA). The thermogravimetric analysis (TGA) measurement method may be performed according to the measurement method described later. As an exemplary embodiment, the lower temperature than the polyethylene reference material at which the peak is shown may be 200 to 400°C.

As an exemplary embodiment, the low molecular weight material may be derived from a binder for the coating layer of the separator.

As an exemplary embodiment, a content of the low molecular weight material may be 3 wt% or less of the total weight of the recycled polyethylene. The content of the low molecular weight material may be calculated by the method described later.

As an exemplary embodiment, the low molecular weight material may have a weight average molecular weight of 5000 g/mol or less. The weight average molecular weight may be measured by the measurement method described later.

As an exemplary embodiment, the porous powder may be mixed at a content of 5 wt% or less.

As an exemplary embodiment, the porous powder may have an average particle diameter of 1 to 10 µm.

As an exemplary embodiment, the porous powder may have an oil absorption of 50 to 150 cc/100 g.

As an exemplary embodiment, the porous powder may have a pore volume of 0.1 to 1.0 ml/g.

As an exemplary embodiment, the porous powder may be any one or a mixture of two or more selected from the group consisting of porous silica, porous zeolite, porous alumina, and the like.

The invention further relates to a recycled polyethylene-containing film, which includes the recycled polyethylene-containing composition according to the invention. The number of pin holes in the film may be 1/m² or less.

As an exemplary embodiment, the recycled polyethylene-containing film may further include a virgin polyolefin-based resin.

As an exemplary embodiment, the recycled polyethylene-containing film may include 60 to 90 wt% of the recycled polyethylene-containing composition and 10 to 40 wt% of a virgin polyolefin-based resin.

As an exemplary embodiment, the recycled polyethylene-containing film may have a thickness of 10 to 200 µm.

Yet further, the invention relates to a method for manufacturing a recycled polyethylene-containing film, the method including: preparing a recycled polyethylene-containing composition by mixing recycled polyethylene, which is recovered from a secondary battery separator, and porous powder; and manufacturing a film by melt extruding the recycled polyethylene-containing composition and a virgin polyolefin-based resin.

As an exemplary embodiment, the manufacturing of a film may include: melt extruding the recycled polyethylene-containing composition and the virgin polyolefin-based resin to prepare pellets, or dry blending them to prepare a mixture; and melt extruding the pellets or the mixture to manufacture a film.

As an exemplary embodiment, the mixing recycled polyethylene, which is recovered from a secondary battery separator, and porous powder comprises:
(i) dry blending the recycled polyethylene in a powder or pellet state and the porous powder in a powder state; or
(ii) adding the recycled polyethylene in a powder or pellet state and the porous powder in a powder state to a batch mixer and mixing them; or
(iii) adding the porous powder in a powder state through a side feeder of an extruder and mixing it with the recycled polyethylene in a powder or pellet state.

As an exemplary embodiment, the recycled polyethylene may be powder obtained by crushing the separator or pellets obtained by melt extruding the separator, without removing a coating layer from the separator.

Other features and aspects will be apparent from the following detailed description, the drawings, and the claims.

### BRIEF DESCRIPTION OF THE DRAWINGS

FIG. 1 is a graph showing results of TGA analysis of the recycled polyethylene recovered from a secondary battery separator according to an exemplary embodiment of the present invention.
FIG. 2 is a graph showing results of TGA analysis of the recycled polyethylene-containing composition according to an exemplary embodiment of the present invention.
FIG. 3 shows the case of pin hole occurrence when manufacturing a recycled polyethylene-containing film according to Comparative Example 1.

### DETAILED DESCRIPTION OF EMBODIMENTS

Hereinafter, the present invention will be described in detail.

In an exemplary embodiment, "recycled polyethylene" is polyethylene recovered from a secondary battery, and refers to powder obtained by crushing a separator recovered by separation by disassembly of a waste secondary battery, a separator recovered from a secondary battery defective product, and a waste separator of any one or more of a waste scrap produced during manufacture of a secondary battery separator, a separator end recovered after trimming, and the like, or a pellet form processed by melt extruding the separators. A melt extrusion temperature during processing into the pellet form may be 200 to 250°C.

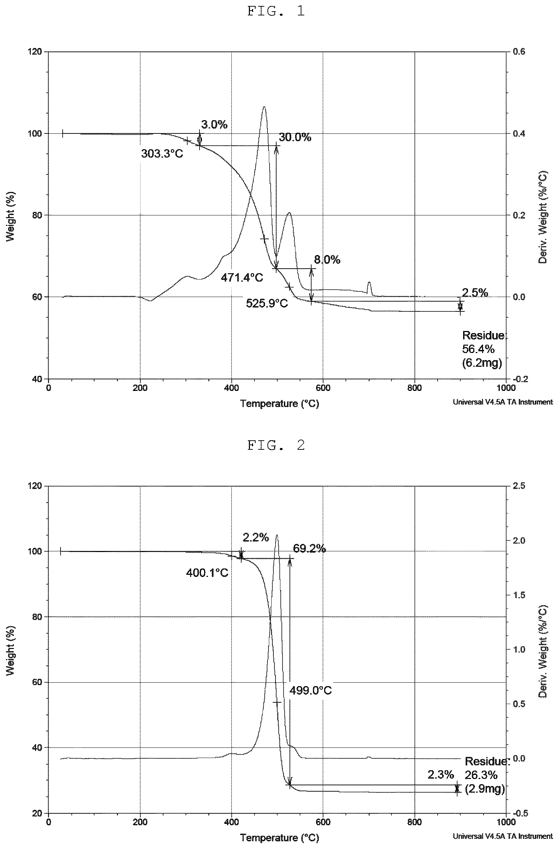

In an exemplary embodiment, "low molecular weight material" refers to, when a polyethylene raw material recovered from a secondary battery separator is analyzed using a thermogravimetric analyzer (TGA), a material having a peak shown at a lower temperature than the temperature at which a main peak is shown, as compared with a graph in which virgin polyethylene having a weight average molecular weight of 50,000 to 2,000,000 g/mol as a reference material is analyzed. For example, it refers to a material having a peak at 200 to 400°C which is lower than 400 to 600°C at which the main peak is shown, as shown in FIG. 1. In addition, the reference material refers to a virgin polyethylene resin which is not prepared into a separator, and may be a virgin polyethylene resin having a weight average molecular weight identical or similar to that of a recycled polyethylene recovered from a secondary battery separator. The content of a low molecular weight material may be calculated by the following method.

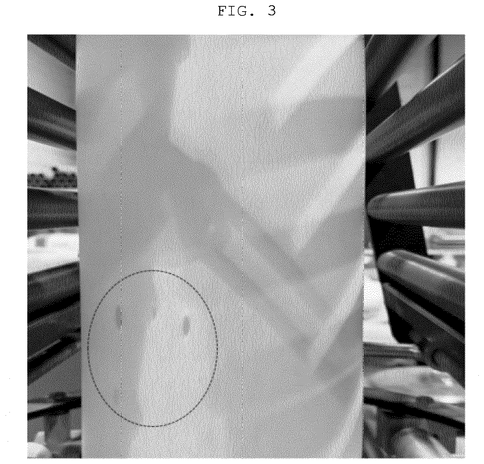

In an exemplary embodiment, a "pin hole" refers to a defect found in a manufactured film as shown in circled parts in FIG. 3. The shape of the pin hole may be round or oval. The pin hole may be a part formed thinner than the average thickness of the film or a part in which a hole is formed. For example, it may be a defect having a diameter of 1 mm or more, or a defect of 1 to 10 mm, and may be smaller or larger. The diameter refers to a minimum length of the shape of a pin hole. That is, in the case of a pin hole in an oval shape having a narrow width and a long length as shown in FIG. 3, it means a diameter in a narrow width.

The present invention provides a recycled polyethylene-containing composition, comprising a mixture of recycled polyethylene recovered from a secondary battery separator, and porous powder.

The present inventors conducted studies in order to manufacture a recycled polyethylene-containing film using recycled polyethylene recovered from a secondary battery separator as a raw material. When the recycled polyethylene-containing film was manufactured using the recovered recycled polyethylene as a raw material, it was confirmed defects such as pin holes occurred, as shown in FIG. 3.

In order to solve the problem, as a result of measuring the recovered recycled polyethylene using a thermogravimetric analyzer (TGA), when the results are compared with the graph of measuring a virgin polyethylene having the same molecular weight as the polyethylene of the recovered secondary battery separator, it was found that an additional peak was found at 200 to 400°C, as shown in FIG. 1. The material found in the peak is referred to as a low molecular weight material, and it was predicted where the low molecular weight material comes from.

Usually, a secondary battery separator has a microporous film formed of a polyethylene resin and a ceramic layer formed on one or both surfaces of the microporous film, and in the ceramic layer, inorganic particles are bonded and fixed by a binder. The low molecular weight material is expected to come from the binder used in the ceramic layer.

In order to manufacture a film, processing is performed at a temperature equivalent to or higher than the melting point of polyethylene as a raw material, and since the low molecular weight material is vaporized at the temperature, it is expected that defects such as pin holes occur on the surface of the film. When the pin hole occurs, the appearance and the physical properties of the film are deteriorated and the film is determined to be defective.

Therefore, as a result of studying in order to solve the problem due to the low molecular weight material in the recycled polyethylene recovered from a secondary battery separator, it was found that the problems such as pin holes may be solved by manufacturing a-containing composition by mixing with porous powder, thereby completing the present invention.

Hereinafter, each constituent element of the present invention will be described in more detail.

### [Recycled polyethylene-containing composition]

The recycled polyethylene-containing composition according to an exemplary embodiment is a mixture of recycled polyethylene recovered from a secondary battery separator and porous powder. The mixing may be mixing of porous powder in a powder state with the recycled polyethylene. The film defects may be resolved, which is intended in the present invention, by mixing in a powder state.

The mixing method may be dry blending or compounding in an extruder, or the like. For example, the mixing method may be a method of dry blending recycled polyethylene in a powder or pellet state and porous powder in a powder state, a method of adding recycled polyethylene in a powder or pellet state and porous powder in a powder state in a batch mixer in a quantitative amount all at once, or a method of adding recycled polyethylene in a powder or pellet state through a feed of an extruder and then adding porous powder in a powder state in a quantitative amount through a side feeder. When the compounding is performed using an extruder, the temperature may be 150°C or higher, 160°C or higher, 170°C or higher, 180°C or higher, 190°C or higher, 200°C or higher and 300°C or lower, 290°C or lower, 280°C or lower, 270°C or lower, 260°C or lower, 250°C or lower, or any value between the numerical values. For example, the compound may be performed in a range of 150 to 300°C, 170 to 250°C, 170 to 230°C, or 170 to 210°C. When the mixing is performed in the range, carbides occur less, the low molecular weight material in the separator may be efficiently removed.

### [Recycled polyethylene recovered from secondary battery separator]

A secondary battery separator usually includes a microporous film formed of a polyethylene resin and a ceramic coating layer having inorganic particles bonded and fixed on one or both surfaces of the microporous film by a binder. Otherwise, if necessary, in order to improve adhesion to an electrode, an adhesive layer including organic binder particles may be formed.

For the recycled polyethylene according to an exemplary embodiment, only a microporous film formed of a polyethylene resin may be separated from a separator having various lamination structures as such and used as a raw material, and also a separator including the ceramic coating layer or the adhesive layer may be used as it is as a raw material.

In an exemplary embodiment, the recycled polyethylene may be used by preparing a raw material in a powder state obtained by crushing the separator or in a pellet state obtained by melt extruding the separator as it is without a process of removing a coating layer from a separator. Therefore, the recycled polyethylene according to an exemplary embodiment may include various materials, for example, inorganic particles, a binder, and the like, in addition to a polyethylene resin.

The recycled polyethylene including the above various materials may satisfy the following physical properties.

A molecular weight of the recycled polyethylene may be a molecular weight of polyethylene which is commonly used in a microporous film as a porous substrate in the separator. For example, the weight average molecular weight (Mw) may be 50,000 g/mol or more, 100,000 g/mol or more, 150,000 g/mol or more, 200,000 g/mol or more, 250,000 g/mol or more, 300,000 g/mol or more, 400,000 g/mol or more, 500,000 g/mol or more, 600,000 g/mol or more, 650,000 g/mol or more, 700,000 g/mol or more, 800,000 g/mol or more, 900,000 g/mol or more and 3,000,000 g/mol or less, 2,000,000 g/mol or less, 1,500,000 g/mol or less, 1,000,000 g/mol or less, or any value between the numerical values. For example, it may be 50,000 to 3,000,000 g/mol, 50,000 to 2,000,000 g/mol, 80,000 to 1,500,000 g/mol, 100,000 to 1,000,000 g/mol, 100,000 to 5,000,000 g/mol, 100,000 to 300,000 g/mol, 150,000 to 250,000 g/mol. The weight average molecular weight may be measured by the measurement method described later.

For example, a number average molecular weight (Mn) may be 20,000 g/mol or more, 30,000 g/mol or more, 40,000 g/mol or more, 50,000 g/mol or more and 1,000,000 g/mol or less, 800,000 g/mol or less, 500,000 g/mol or less, 300,000 g/mol or less, or any value between the numerical values. For example, it may be 20,000 to 1,000,000 g/mol, 30,000 to 800,000 g/mol, 30,000 to 500,000 g/mol, 30,000 to 300,000 g/mol, or 30,000 to 100,000 g/mol. The number average molecular weight may be measured by the measurement method described later.

In addition, a melt flow index measured at 190°C, 2.16 kg in accordance with ASTM D1238 may be 5 g/10 min or less, 4 g/10 min or less, 3 g/10 min or less, 2 g/10 min or less, 1 g/10 min or less and 0.01 g/10 min or more, 0.02 g/10 min or more, 0.03 g/10 min or more, 0.04 g/10 min or more, 0.05 g/10 min or more, 0.06 g/10 min or more, 0.07 g/10 min or more, 0.08 g/10 min or more, 0.09 g/10 min or more, 0.1 g/10 min or more, 0.2 g/10 min or more, 0.3 g/10 min or more, 0.4 g/10 min or more, 0.5 g/10 min or more, 0.6 g/10 min or more, 0.7 g/10 min or more, 0.8 g/10 min or more, 0.9 g/10 min or more, or any value between the numerical values. For example, it may be 0.01 to 5 g/10 min, 0.01 to 4 g/10 min, 0.01 to 3 g/10 min, 0.01 to 2 g/10 min, 0.01 to 1 g/10 min, 0.01 to 0.9 g/10 min, 0.01 to 0.5 g/10 min, 0.01 to 3 g/10 min, 0.01 to 2 g/10 min, or 0.01 to 1 g/10 min.

In addition, a content of inorganic particles may be 70 wt% or less, 50 wt% or less, 30 wt% or less, 25 wt% or less and 1 wt% or more, 2 wt% or more, 3 wt% or more, 4 wt% or more, 5 wt% or more, 6 wt% or more, 7 wt% or more, 8 wt% or more, 9 wt% or more, 10 wt% or more, 15 wt% or more, 20 wt% or more, or any numerical value between the ranges. For example, it may be 1 to 70 wt%, 2 to 50 wt%, 3 to 30 wt%, 5 to 30 wt%, 10 to 30 wt%, 15 to 30 wt%, or 20 to 25 wt%. The content of inorganic particles is a content determined in the manufacture of the separator, and within the range, may provide a melt flow index which allows molding by melt extrusion. The inorganic particles may be contained in the ceramic coating layer or the microporous film itself.

In addition, a density measured in accordance with ASTM D 792 may be 0.95 g/cm³ or more, 1.0 g/cm³ or more, 1.1 g/cm³ or more, 1.2 g/cm³ or more, 1.3 g/cm³ or more, 1.4 g/cm³ or more and 1.5 g/cm³ or less, or any value between the numerical values. For example, it may be 0.95 to 1.5 g/cm³, 0.95 to 1.3 g/cm³, 0.95 to 1.2 g/cm³, or 1.0 to 1.2 g/cm³.

In addition, a melting point (Tm) may be 100°C or higher, 110°C or higher, 120°C or higher, 130°C or higher, 140°C or higher and 250°C or lower, 240°C or lower, 230°C or lower, 220°C or lower, 210°C or lower, 200°C or lower, 180°C or lower, 170°C or lower, 160°C or lower, 150°C or lower, or any value between the numerical values. For example, it may be 100 to 250°C, 110 to 230°C, 120 to 200°C, 120 to 180°C, 120 to 160°C, or 120 to 150°C. The melting point is measured according to the method described later.

When the recycled polyethylene satisfies the above ranges, it may be molded by melt extrusion and manufactured into a recycled polyethylene-containing film, which is thus more preferred.

As an exemplary embodiment, a content of a low molecular weight material in the recycled polyethylene may be 3 wt% or less, 2 wt% or less, 1 wt% or less, or any numerical value between the numerical values of the total weight of the recycled polyethylene. The content of the low molecular weight material may be obtained by calculating an area value to the low molecular weight material having a molecular weight of 5000 g/mol or less in a calibration curve of a gel permeation chromatography (GPC). Otherwise, a weight loss ratio at around 200 to 400°C is measured in thermogravimetric analysis (TGA) data, and a ratio of the low molecular weight material may be determined by comparing it with the total weight of a sample.

As an exemplary embodiment, the weight average molecular weight of the low molecular weight material included in the recycled polyethylene may be in a lower range than the weight average molecular weight of the polyethylene microporous film which is the porous substrate of the separator. For example, the weight average molecular weight may be 5000 g/mol or less, 4500 g/mol or less, 4000 g/mol or less, 3500 g/mol or less, 3000 g/mol or less and 100 g/mol or more, 500 g/mol or more, 600 g/mol or more, 700 g/mol or more, 800 g/mol or more, 900 g/mol or more, 1000 g/mol or more, or any value between the numerical values. For example, the weight average molecular weight may be 500 to 5000 g/mol, 1000 to 5000 g/mol, 1000 to 4500 g/mol, 1000 to 4000 g/mol, or 1000 to 3000 g/mol. The weight average molecular weight of the low molecular weight material is measured by the specific method described later.

### [Porous powder]

In an exemplary embodiment, the porous powder may be porous particles in a powder state. For example, it may be any one or a mixture of two or more selected from the group consisting of porous silica, porous zeolite, and porous alumina. In addition, the porous particles in a powder state in the present disclosure refer to porous particles in a powder state which is distinguished from the inorganic particles included in the secondary battery separator and is separately added.

As an exemplary embodiment, the content of the porous powder may be 5 wt% or less, 4 wt% or less, 3 wt% or less, or 2 wt% or more in the recycled polyethylene-containing composition, and any value between the numerical values. For example, it may be used at a content of 2 to 5 wt% or 3 to 5 wt%, and within the range, film moldability is excellent and also occurrence of defects in the film may be sufficiently prevented. When an excessively high content of the porous powder is added, viscosity is increased to increase a load to an extruder during film extrusion and reduce productivity during film manufacture. In addition, agglomeration of porous powder may occur to deteriorate quality of a film surface.

In addition, the recycled polyethylene-containing composition may have a total inorganic content including the inorganic particles included in the recycled polyethylene and the porous powder of 50 wt% or less, 45 wt% or less, 40 wt% or less, 35 wt% or less, 30 wt% or less, 28 wt% or less and 10 wt% or more, 15 wt% or more, 20 wt% or more, or 22 wt% or more, and any value between the numerical values. For example, the content may be 10 to 50 wt%, 15 to 45 wt%, 20 to 40 wt%, or 22 to 30 wt%. Film moldability may be excellent within the range.

As an exemplary embodiment, the porous powder may have an average particle diameter of 1 to 10 µm, an oil absorption of 50 to 150 cc/100 g, and a pore volume of 0.1 to 1.0 ml/g. Within the range, an effect of reducing pin hole occurrence resulting from a low molecular weight material of recycled polyethylene recovered from the secondary battery separator according to an exemplary embodiment is excellent, which is thus, preferred.

As an exemplary embodiment, the porous powder may have an average particle diameter of 1 um or more, 2 um or more, 3 um or more, 4 um or more, 5 um or more and 10 µm or less, 9 µm or less, 8 µm or less, 7 µm or less, 6 µm or less, or any value between the numerical values. For example, the average particle diameter may be 1 to 10 µm, 1 to 9 µm, 1 to 8 µm, 1 to 7 um, or 2 to 6 um. The average particle diameter may be measured according to the measurement method described later.

As an exemplary embodiment, the porous powder may have an oil absorption of 50 cc/100 g or more, 60 cc/100 g or more, 70 cc/100 g or more, 80 cc/100 g or more, 90 cc/100 g or more, 95 cc/100 g or more and 150 cc/100 g or less, 140 cc/100 g or less, 135 cc/100 g or less, 130 cc/100 g or less, 120 cc/100 g or less, 110 cc/100 g or less, 100 cc/100 g or less, or any value between the numerical values. For example, the oil absorption may be 50 to 150 cc/100 g, 60 to 150 cc/100 g, 70 to 150 cc/100 g, 80 to 140 cc/100 g, or 90 to 135 cc/100 g. The oil absorption may be measured according to the measurement method described later.

As an exemplary embodiment, the porous powder may have a pore volume of 0.1 ml/g or more, 0.2 ml/g or more, 0.3 ml/g or more, 0.4 ml/g or more, 0.5 ml/g or more and 1.0 ml/g or less, 0.9 ml/g or less, 0.8 ml/g or less, 0.7 ml/g or less, 0.6 ml/g or less, or any value between the numerical values. For example, the pore volume may be 0.1 to 1.0 ml/g, 0.2 to 0.8 ml/g, 0.3 to 0.7 ml/g, or 0.4 to 0.6 ml/g. The pore volume may be measured according to the measurement method described later.

As an exemplary embodiment, the porous powder may have a pH of 4 or more, 5 or more and 8 or less, 7.5 or less, 7 or less, 6 or less, or any value between the numerical values. For example, it may be 4 to 8. The pH may be measured according to the measurement method described later.

As an exemplary embodiment, the porous powder may have a moisture content in accordance with a loss-on-drying (LOD) method of 5 wt% or less, 4 wt% or less, 3.5 wt% or less, 3 wt% or less, 2 wt% or less, or 1.8 wt% or less, and its lower limit may be 0.1 wt% or more. In addition, the moisture content may be any value between the numerical values. For example, the moisture content may be 0.1 to 5 wt%, 0.1 to 4 wt%, or 0.1 to 3.5 wt%. The moisture content may be measured according to the measurement method described later.

As an exemplary embodiment, it is preferred that the porous powder is mixed in a powder state with the recycled polyethylene, and an effect of removing defects such as pin holes to be desired may be achieved. It is not excluded to add the porous powder prepared as a master batch by mixing it with a polyethylene resin, but in the context of the present invention, the low molecular weight material of the recycled polyethylene may be removed better when the porous powder is pre-mixed in a powder state with the recycled polyethylene.

### [Recycled polyethylene-containing film and manufacturing method thereof]

The invention further relates to a recycled polyethylene-containing film manufactured using the recycled polyethylene-containing composition as described.

As an exemplary embodiment, the recycled polyethylene-containing film provides a recycled polyethylene-containing film having the number of pin holes of 1/m² or less or substantially having no pin hole formed, that is, the number of pin holes of 0/m². For example, the number of pin holes may be 0 to 1/m², 0.01 to 1/m², 0.05 to 1/m², 0.1 to 1/m², 0.2 to 1/m², 0.3 to 1/m². The pin holes may be measured according to the measurement method described later.

As an exemplary embodiment, the composition for manufacturing a film may include the recycled polyethylene-containing composition alone. As an exemplary embodiment, the composition for manufacturing a film may include the recycled polyethylene-containing composition and a virgin polyolefin-based resin.

The virgin polyolefin-based resin refers to a new product which has never been used, and may be selected from the group consisting of polyethylene, polypropylene, and the like.

Since the physical properties of the virgin polyolefin-based resin may be adjusted and used depending on the physical properties of the recycled polyethylene-containing film to be finally produced, the physical properties are not limited. For example, the virgin polyolefin-based resin may be a polyethylene resin.

As an exemplary embodiment, the composition for manufacturing a film may include 60 to 90 wt% of the recycled polyethylene-containing composition and 10 to 40 wt% of the virgin polyolefin-based resin. In addition, the composition may include 70 to 80 wt% of the recycled polyethylene-containing composition and 20 to 30 wt% of the virgin polyolefin-based resin. Within the content range, a recycled polyethylene-containing film having excellent processability and excellent mechanical properties may be manufactured, but since a mixing ratio may be changed depending on the physical properties of the virgin polyolefin-based resin to be mixed.

As an exemplary embodiment, the composition for manufacturing a film may usually further include an additive such as inorganic particles, an anti-blocking agent, a sunscreen, and a pigment, if necessary, in the film manufacture. A content of the additive may be 5 wt% or less, 4 wt% or less, 3 wt% or less, 2 wt% or less and 0.1 wt% or more, 0.2 wt% or more, 0.5 wt% or more, or any value between the numerical values. For example, it may be 0.1 to 5 wt%, 0.2 to 4 wt%.

As an exemplary embodiment, the recycled polyethylene-containing film may have a thickness of 10 um or more, 20 um or more, 30 um or more and 200 µm or less, 180 um or less, 150 µm or less, 130 um or less, 120 µm or less, 100 um or less, 80 um or less, 60 µm or less, 50 um or less, 40 um or less, or any value between the numerical values. For example, it may be 10 to 200 µm, 20 to 100 um, or 30 to 80 um. The film thickness may be measured using a thickness meter (TELCLOCK CORPORATION, PG-02).

Yet further, the invention relates to a method for manufacturing a recycled polyethylene-containing film.

The method for manufacturing a recycled polyethylene-containing film according to the invention includes:
pre-mixing recycled polyethylene recovered from a secondary battery separator and porous powder in a powder form to prepare a recycled polyethylene-containing composition; and
melt extruding the recycled polyethylene-containing composition and a virgin polyolefin-based resin to manufacture the film.

As an exemplary embodiment, the recycled polyethylene-containing composition may be prepared by pre-mixing recycled polyethylene recovered from a secondary battery separator porous powder in a powder form. The pre-mixing may use a reactor commonly used for preparing a-containing composition as well as an extruder. For example, during the pre-mixing, a method may be selected from the following (i) to (iii):
(i) dry blending the recycled polyethylene in a powder or pellet state and the porous powder in a powder state,
(ii) adding the recycled polyethylene in a powder or pellet state and the porous powder in a powder state to a batch mixer and mixing them, and
(iii) including adding the porous powder in a powder state through a side feeder of an extruder and mixing it with the recycled polyethylene in a powder or pellet state.

As an exemplary embodiment, when the compounding is performed using an extruder, the temperature may be 150°C or higher, 160°C or higher, 170°C or higher, 180°C or higher, 190°C or higher, 200°C or higher and 300°C or lower, 290°C or lower, 280°C or lower, 270°C or lower, 260°C or lower, 250°C or lower, or any value between the numerical values. For example, the compound may be performed in a range of 150 to 300°C, 170 to 250°C, 170 to 230°C, or 170 to 210°C. When the mixing is performed in the range, carbides occur less, the low molecular weight material in the separator may be efficiently removed.

As an exemplary embodiment, the recycled polyethylene-containing composition and the virgin polyolefin-based resin may be melt-extruded to manufacture a film. Herein, the film may be manufactured by melt extruding the recycled polyethylene-containing composition and the virgin polyolefin-based resin to prepare pellets, or dry blending them to prepare a mixture; and melt extruding the pellets or the mixture. When the pellets are manufactured, the melting temperature may be 150°C or higher, 160°C or higher, 170°C or higher, 180°C or higher, 190°C or higher, 200°C or higher and 300°C or lower, 290°C or lower, 280°C or lower, 270°C or lower, 260°C or lower, 250°C or lower, or any value between the numerical values. For example, it may be performed in a range of 150 to 300°C, 170 to 250°C, 170 to 230°C, or 170 to 210°C.

In addition, when the film is manufactured by melt extrusion, though the melting temperature may be 150°C or higher, 160°C or higher, 170°C or higher, 180°C or higher, 190°C or higher, 200°C or higher and 300°C or lower, 290°C or lower, 280°C or lower, 270°C or lower, 260°C or lower, 250°C or lower, or any value between the numerical values. For example, it may be performed in a range of 150 to 300°C, 170 to 250°C, 180 to 230°C, or 180 to 210°C.

As an exemplary embodiment, the manufacturing of a film may be performed by using a blown extruder, or manufacturing a sheet form through a T-die and stretching the sheet uniaxially or biaxially.

Hereinafter, the examples of the present invention will be further described with reference to the specific experimental examples.

Hereinafter, the physical properties were evaluated as follows:

### 1) Presence or absence of low molecular weight material and its content

Measurements were made using Thermogravimetric Analyzers (TGA, TA Instrument/ TGA Q500 product).

About 10 mg of a specimen was prepared according to a TGA Pan container.

The prepared sample was placed on a TGA Auto Sampler, and analysis was performed after selecting the desired temperature range, heating rate, and reactive gas. The sample was heated from room temperature to 900°C at 10°C/min, and the atmosphere was converted from a N2 gas atmosphere into an air atmosphere at 700°C.

Experimental temperature range: room temperature to 900°C/ 700°C air change (N₂ → air)
Atmosphere: N₂
Heating rate: 10°C/min

In addition, the content of a low molecular weight material having a weight average molecular weight of 5000 g/mol or less was checked by checking a weight loss ratio at around 200 to 400°C in TGA data and calculating a ratio of the low molecular weight material in the total weight.

### 2) Occurrence or absence of pin holes

Visual evaluation was made as to whether pin holes (defects) occurred on the manufactured film.

The pin hole refers to a defect occurring on the film as circled in FIG. 3.

### 3) Melt flow index (MFI)

Measurements were made at 190°C under 2.16 kg according to ASTM D 1238. The unit is g/10 min.

### 4) Density

Measurements were made according to ASTM D1505 and ASTM D 792. The unit is g/cm³.

### 5) Inorganic content

The inorganic content was checked by calculating a weight fraction of residue remaining without being decomposed at 800°C or higher, in the TGA measurement by the method of 1) above. Inorganic content = (weight of residue/ weight of sample) × 100

### 6) Weight average molecular weight (Mw) and number average molecular weight (Mn)

Weight average molecular weight (Mw) and number average molecular weight (Mn) were measured using GPC (Agilent, GPC_1260InfitiyII New). PL1110-6400 and PL1110-1400 were used as a GPC column, and a column temperature was 160°C. 1,2,4-Trichlorobenzene was used as a solvent, polystyrene was used as a standard material, and analysis was performed at room temperature, 160°C, at a flow rate of 1 mL/min. In addition, a polydispersity index (PDI) value was calculated from Mw and Mn. Other specific conditions are as follows.

Analysis instrument: three columns (model name: PLgel Olexis available from Agilent 7.5×300 mm, 13 µm) and one guard column (model name: PLgel Olexis available from Agilent 7.5×50 mm, 13 um) were connected, a temperature of 160°C and a GPC flow rate of 1 mL/min were set, and a GPC system to which a refractive index detector was connected (model name: 1260 Infinity II High-Temperature GPC System available from Agilent) was used.

Sample preparation: in order to inject a sample solution at a concentration of 1.1 to 1.3 mg/ml to a GPC instrument, a sample solution was prepared considering a residue amount analyzed by TGA. At this time, 1 ml of 1,2,4-trichlorobenzene of 200 ppm of butylated hydroxytoluene was used as a solvent. Stirring was performed at 160°C for 4 hours using a heating block, and then an external filtration system (model name: Polymerchar, External Filtration System) was used to perform filtration under the condition of 160°C. Analysis was performed by injecting 200 µL of the prepared solution into the GPC.

### 7) Average particle diameter

The particle size and the distribution of the material were measured using a particle analyzer (Malvern Panalytical, product name: Mastersizer 3000 series). Particles were irradiated with a laser beam through an instrument, and an intensity of scattered light was measured to calculate a particle size. The average particle diameter refers to D50, that is, a particle size at 50% in the total particle size distribution. The unit is µm.

### 8) Oil absorption

An excessive amount of linseed oil was mixed with a measurement sample and impregnated into the sample, and then centrifugation was performed to separate the sample and the oil. Thereafter, the amount was measured to measure the amount of the linseed oil absorbed in the sample. The unit is cc/100 g, which is a consumed amount (cc) of the linseed oil per 100 g of the sample.

### 9) Pore volume

The pore volume was measured according to a Brunauer, Emmett and Teller (BET) measurement method. The unit is ml/g.

### 10) Loss-on-drying method (LOD)

A moisture rate was measured considering a difference in weights (loss) before and after drying using a halogen loss-on-drying meter. The drying conditions were 2 hours at 160°C.

### 11) pH

5 g of porous powder was added to a 100 mL beaker, 50 mL of water was added and shaken, and the measurement was performed using a pH meter.

### 12) Melting point

The melting point was measured while heating from - 50°C to 200°C at a rate of 10°C/min under a N2 environment, using a differential scanning calorimetry analyzer (DSC, Q20, TA instrument).

### [Example 1]

### [Preparation of recycled polyethylene-containing composition]

The physical properties of recycled polyethylene pellets recovered from a secondary battery separator were measured and are shown in the following Table 1. In addition, the results of analyzing TGA are shown in FIG. 1. As shown in FIG. 1, a peak of the low molecular weight material was found at around 200 to 400°C.

In addition, the physical properties of porous silica powder are shown in the following Table 2.

97 wt% of the recycled polyethylene and 3 wt% of the porous silica powder were mixed at 150 rpm while heating from 170°C to 210°C in a twin screw extruder to prepare a recycled polyethylene-containing composition.

The results of TGA analysis of the prepared recycled polyethylene-containing composition are shown in FIG. 2. As shown in FIG. 2, it was confirmed that a peak of the low molecular weight material at around 200 to 400°C which is seen in FIG. 1 disappeared.

### [Manufacture of recycled polyethylene-containing film]

70 wt% of the prepared recycled polyethylene-containing composition and 30 wt% of a virgin polyethylene resin (SK Geo Centric, YUZEX^{™} 8700) were prepared in advance by dry blending. The prepared mixture was added to a blown extruder, and extruded while heating from 180°C to 200°C under the conditions of a screw rpm of 60 m/min. Air was injected into an extrudate which was extruded from a blown die to be processed into a thin film form, which was cooled and wound at a roll speed of 6.8 m/min to manufacture a film. The thickness of the manufactured film was 33 µm.

It was confirmed that the number of pin holes of the manufactured film was 1/m² or less. In addition, it was confirmed that stable film molding was allowed without occurrence of breakage during film manufacture.

**[Table 1]**

| | Unit | Value |
|---|---|---|
| Melt Flow Index (2.16 kg, 190°C) | g/10 min | 0.02 |
| Density | g /cm³ | >1.0 |
| Content of inorganic particles | % | 20 - 25 |
| Mn | g/mol | 36,000 |
| Mw | g/mol | 212,000 |
| Melting point | °C | 120 - 150 |

**[Table 2]**

| | Unit | Value | Test Method |
|---|---|---|---|
| Average Particle Size | µm | 4.5 - 5.4 | Malvern |
| pH | - | 4 - 6 | 5wt% in Water |
| LOD (Moisture) | wt% | 1.8 | 160°C, 2 hrs |
| Pore Volume | ml/g | 0.4 | BET |
| Oil Absorption | cc/100 g | 90 - 110 | Linseed Oil |

### [Example 2]

A recycled polyethylene-containing film was manufactured in the same manner as in Example 1, except that the content of recycled polyethylene was adjusted to 95 wt% and the content of porous silica powder was adjusted to 5 wt% in the manufacture of the recycled polyethylene-containing composition.

It was confirmed that the number of pin holes of the manufactured film was 1/m² or less. In addition, it was confirmed that stable film molding was allowed without occurrence of breakage during film manufacture.

### [Example 3]

A recycled polyethylene-containing film was manufactured in the same manner as in Example 1, except that the content of recycled polyethylene was adjusted to 94 wt% and the content of porous silica powder was adjusted to 6 wt% in the manufacture of the recycled polyethylene-containing composition.

When the manufactured film therefrom was checked, it was confirmed that surface quality was lowered by an agglomeration phenomenon of silica powder. In addition, due to an increase in viscosity of the-containing composition according to an increase in the content of the porous silica powder, a film extruder load was increased and an instability phenomenon of film bubbles occurred.

### [Example 4]

A recycled polyethylene-containing film was manufactured in the same manner as in Example 1, except that 3 wt% of the porous silica powder having the physical properties described in the following Table 3 was used.

It was confirmed that the number of pin holes of the manufactured film was 1/m² or less. In addition, it was confirmed that stable film molding was allowed without occurrence of breakage during film manufacture.

**[Table 3]**

| | Unit | Value | Test Method |
|---|---|---|---|
| Average Particle Size | µm | 4.3 - 5.1 | Malvern |
| pH | - | 5.5 - 7.5 | 5 wt% in water |
| LOD (Moisture) | wt% | max 2.0 | 160°C, 2 hrs |
| Pore Volume | ml/g | 0.6 | BET |
| Oil Absorption | cc/100 g | 60 - 100 | Linseed Oil |

### [Example 5]

A recycled polyethylene-containing film was manufactured in the same manner as in Example 1, except that 3 wt% of the porous silica powder having the physical properties described in the following Table 4 was used.

It was confirmed that the number of pin holes of the manufactured film was 1/m² or less. In addition, it was confirmed that stable film molding was allowed without occurrence of breakage during film manufacture.

**[Table 4]**

| | Unit | Value | Test Method |
|---|---|---|---|
| Average Particle Size | µm | 3.6 - 4.4 | Malvern |
| pH | - | 5 - 7 | 5 wt% in water |
| LOD (Moisture) | wt% | max. 2.0 | 160°C, 2 hrs |
| Pore Volume | ml/g | 0.4 | BET |
| Oil Absorption | cc/100 g | 70 - 110 | Linseed Oil |

### [Example 6]

A recycled polyethylene-containing film was manufactured in the same manner as in Example 1, except that 3 wt% of the porous silica powder having the physical properties described in the following Table 5 was used.

It was confirmed that the number of pin holes of the manufactured film was 1/m² or less. In addition, it was confirmed that stable film molding was allowed without occurrence of breakage during film manufacture.

**[Table 5]**

| | Unit | Value | Test Method |
|---|---|---|---|
| Average Particle Size | µm | 2.7 - 3.3 | Malvern |
| pH | - | 4 - 6 | 5 wt% in Water |
| LOD (Moisture) | wt% | max. 3.5 | 160°C, 2 hrs |
| Pore Volume | ml/g | 0.6 | BET |
| Oil Absorption | cc/100 g | 95 - 135 | Linseed Oil |

### [Comparative Example 1]

A recycled polyethylene-containing film was manufactured using the recycled polyethylene recovered from a secondary battery separator as it is as a raw material, without using the porous silica powder of Example 1.

70 wt% of the recycled polyethylene recovered from a secondary battery separator and 30 wt% of a virgin polyethylene resin (SK Geo Centric, YUZEXTM 8700) were used to manufacture a recycled polyethylene-containing film under the same conditions as in Example 1.

As a result, occurrence of pin holes was confirmed, as shown in FIG. 3.

### [Comparative Example 2]

A recycled polyethylene-containing film was manufactured in the same manner as in Example 1, except that the porous silica powder was not added in a powder form, but was added after preparing a master batch, in the manufacture of the recycled polyethylene-containing composition.

That is, the porous silica powder was compounded with a polyethylene resin (SK Geo Centric, YUZEXTM 8700) to prepare a master batch, which was added at a content to content to make the porous silica powder in the film 3 wt% to prepare a recycled polyethylene-containing composition. As a result of manufacturing a film in the same manner as in Example 1 using the composition, occurrence of many pinholes in the recycled polyethylene-containing film was confirmed.

### [Comparative Example 3]

A recycled polyethylene-containing film was manufactured in the same manner as in Example 1, except that nonporous titanium dioxide particles having an average particle diameter of 5 um were used, instead of the porous silica powder, in the manufacture of the recycled polyethylene-containing composition.

As a result, occurrence of many pin holes in the recycled polyethylene-containing film was confirmed.

The recycled polyethylene-containing composition according to an exemplary embodiment includes polyethylene recovered from a secondary battery separator, and may be reused as a raw material for manufacturing films, though a coating composition, inorganic particles, and the like used for manufacturing a separator are included.

In addition, a recycled polyethylene-containing film using the composition as a raw material may prevent occurrence of defects such as pin holes.

The recycled polyethylene-containing film according to the present invention may be applied to various film fields such as a separator for a secondary battery and recyclable trash bag.

## Claims

1. A recycled polyethylene-containing composition, comprising a mixture of:
recycled polyethylene recovered from a secondary battery separator; and
porous powder.

2. The composition of claim 1, wherein the recycled polyethylene is powder obtained by crushing the separator or pellets obtained by melt extruding the separator, without removing a coating layer from the separator.

3. The composition of any preceding claim, wherein the recycled polyethylene has a content of inorganic particles of 70 wt% or less.

4. The composition of any preceding claim, wherein a total inorganic content of the composition, including inorganic particles included in the recycled polyethylene and the porous powder, is 50 wt% or less.

5. The composition of any preceding claim, wherein the recycled polyethylene includes a low molecular weight material having a weight average molecular weight of 5000 g/mol or less, which is preferably decomposed at a lower temperature than a polyethylene reference material and shows a peak in results of measurement using a thermogravimetric analyzer (TGA), wherein a content of the low molecular weight material is preferably 3 wt% or less of the total weight of the recycled polyethylene.

6. The composition of any preceding claim, wherein content of the porous powder in the composition is 5 wt% or less.

7. The composition of any preceding claim, wherein the porous powder has an average particle diameter of 1 to 10 um, when measured as described in the specification, and/or an oil absorption of 50 to 150 cc/100 g, when measured as described in the specification, and/or a pore volume of 0.1 to 1.0 ml/g, when measured as described in the specification.

8. The composition of any preceding claim, wherein the porous powder is selected from the group consisting of porous silica, porous zeolite, porous alumina, and mixtures thereof.

9. A recycled polyethylene-containing film comprising the recycled polyethylene polyethylene-containing composition of any one of the preceding claims.

10. The film of claim 9 further comprising a virgin polyolefin-based resin, wherein the film preferably includes 60 to 90 wt% of the recycled polyethylene -containing composition and 10 to 40 wt% of the virgin polyolefin-based resin.

11. The film of claim 9 or 10, wherein the film has a thickness of 10 to 200 µm.

12. A method for manufacturing a recycled polyethylene-containing film, preferably a recycled polyethylene-containing film according to any one of claims 9 to 11, the method comprising:
preparing a recycled polyethylene-containing composition, preferably a recycled polyethylene-containing composition according to any one of claims 1 to 8, by mixing recycled polyethylene recovered from a secondary battery separator and porous powder; and
manufacturing the film by melt extruding the recycled polyethylene-containing composition and a virgin polyolefin-based resin.

13. The method of claim 12, wherein the step of manufacturing the film includes:
melt extruding the composition and the virgin polyolefin-based resin to prepare pellets, or dry blending them to prepare a mixture; and
melt extruding the pellets or the mixture to manufacture the film.

14. The method of claim 12 or 13, wherein the mixing recycled polyethylene recovered from a secondary battery separator and porous powder comprises:
(i) dry blending the recycled polyethylene in a powder or pellet state and the porous powder in a powder state; or
(ii) adding the recycled polyethylene in a powder or pellet state and the porous powder in a powder state to a batch mixer and mixing them; or
(iii) adding the porous powder in a powder state through a side feeder of an extruder and mixing it with the recycled polyethylene in a powder or pellet state.

15. The method of any one of claims 12 to 14, wherein the recycled polyethylene is powder obtained by crushing the separator or pellets obtained by melt extruding the separator, without removing a coating layer from the separator.
